# FASCICULE DE BREVET EUROPEEN

(11) **EP 4 185 549 B1**
(45) Date de publication et mention de la délivrance du brevet: **02.07.2025**
(21) Numéro de dépôt: 21755513.5
(22) Date de dépôt: 16.07.2021
(51) Int. Cl.: B65H 69/02, B29C 65/48, B29C 65/78, B29C 65/14, B29C 65/54, B29C 65/68, B29C 65/00

(54) **PROCEDE ET DISPOSITIF DE RABOUTAGE DES FIBRES TEXTILES MULTIFILAMENTAIRES**
VERFAHREN UND VORRICHTUNG ZUM SPLEISSEN VON MULTIFILEN TEXTILFASERN
METHOD AND DEVICE FOR SPLICING MULTIFILAMENT TEXTILE FIBRES

(30) Priorité: 23.07.2020 FR 2007756
(43) Date de publication de la demande: 31.05.2023
(73) Titulaire: COMPAGNIE GENERALE DES ETABLISSEMENTS MICHELIN, 63000 Clermont-Ferrand (FR)
(72) Inventeur: OLSOMMER, David, 63040 CLERMONT-FERRAND CEDEX 9 (FR); BERGUERAND, Philippe, 63040 CLERMONT-FERRAND CEDEX 9 (FR); DELFINO, Antonio, 63040 CLERMONT-FERRAND CEDEX 9 (FR)
(74) Mandataire: M.F.P. Michelin
(86) Numéro de dépôt international: PCT/FR2021/051328
(87) Numéro de publication internationale: WO 2022/018364

(56) Documents cités:
- DE-A1- 2 929 748
- FR-A5- 2 231 264
- US-A- 4 923 540
- US-B1- 10 131 516

## Description

La présente invention se rapporte aux procédés de fabrication en continu de matériaux composites longilignes réalisées par imprégnation d'une composition durcissable des fibres textiles multifilamentaires et elle concerne plus particulièrement un procédé de raboutage de telles fibres textiles avant leur imprégnation.

Le document EP 1 174 250 décrit un procédé et une installation d'imprégnation en continu de fibres de grande longueur par de la résine pour la fabrication d'éléments composites longilignes en grande longueur, composites qui comportent des fibres de renforcement noyées dans une matrice en résine durcie. Le procédé décrit comprend une étape d'entraînement d'un faisceau de fibres de renforcement, à partir d'une bobine de stockage des fibres, pour la faire passer dans une enceinte sous vide puis dans une chambre d'imprégnation où les fibres sont imprégnées de résine, suivie d'une étape lors de laquelle les fibres imprégnées passent à travers une filière de calibrage après avoir préalablement stabilisé la forme de l'imprégné par une polymérisation au moins partielle de la résine de l'imprégné. Des filières de calibrage de forme et dimensions prédéterminées sont présentes aussi à l'entrée de l'enceinte sous vide et avant la chambre d'imprégnation. Les filières de l'installation sont toutes finement dimensionnées en fonction du diamètre du faisceau de fibres de renforcement. L'installation comprend un rouleau de traction qui assure l'entraînement des fibres depuis la bobine de stockage des fibres et une bobine de réception de l'imprégné.

Fonctionnant à satisfaction, il s'est toutefois avéré que le remplacement d'une bobine de stockage vidée par une nouvelle bobine nécessitait un arrêt complet de l'installation ainsi qu'un nettoyage complet de celle-ci avant la mise en route avec la nouvelle bobine en place, ce qui implique des temps d'arrêt importants avec des conséquences négatives sur la productivité. En effet, après une période de fonctionnement d'environ cinq heures, la bobine de stockage des fibres est vidée. On arrête alors l'installation et on procède au remplacement de la bobine vide par une nouvelle bobine pleine. On doit ensuite vider complétement la chambre d'imprégnation et nettoyer l'installation avant la remise en route de l'installation. Cette période d'arrêt peut prendre entre une et trois heures. Il existe donc un besoin accru de pouvoir joindre bout à bout la fin des fibres d'une bobine avec le début de celles d'une nouvelle bobine et de les réunir en un seul morceau, sans arrêt complet de l'installation.

On connaît dans l'état de la technique différentes solutions permettant de réaliser un raboutage des fibres textiles. Une telle solution est décrite dans le document JP5-239729. Selon ce document, on insère d'abord les parties terminales de deux faisceaux de fibres de verre dans un passage de section circulaire d'un dispositif de raboutage. De l'air comprimé est soufflé à travers une entrée d'air perpendiculaire à ce passage de manière à ouvrir les parties d'extrémité des faisceaux de fibres de verre et à mélanger entre eux les faisceaux des fibres de verre. On obtient ainsi un faisceau combiné de fibres de verre. On note toutefois qu'au niveau de la jonction des deux faisceaux l'épaisseur du faisceau combiné se trouve beaucoup agrandie. Or, une telle solution ne convient pas à l'utilisation dans le cadre d'une installation de fabrication en continu de matériaux composites longilignes du type décrit plus haut car la partie de jonction de grande épaisseur ne peut pas passer au travers des filières de calibrage de l'installation.

Une autre solution a été décrite dans le document US 2019/0135576 qui enseigne l'utilisation d'une table de support à plat d'une partie terminale d'un premier faisceau de fibres et sur laquelle un dispositif de transfert à rouleau vient déposer la partie terminale d'un deuxième faisceau. La partie terminale du deuxième faisceau est d'abord accrochée, puis enroulée autour du rouleau du dispositif de transfert. Ce rouleau vient alors se positionner à proximité de la table de support et il déroule la partie terminale du deuxième faisceau en la superposant sur celle du premier faisceau. Un dispositif de thermocompression est ensuite appliqué sur les parties terminales superposées des deux faisceaux qui sont ainsi soudées pour former un seul faisceau. La partie de jonction du faisceau ainsi obtenu présente, certes, une épaisseur moindre que celle obtenue par un raboutage dit « à foisonnement » du document précédent, mais elle est toujours trop importante pour pouvoir traverser l'orifice calibré de chacune des filières de l'installation de fabrication en continu de matériaux composites longilignes ici décrite.

Le document US 4923540 décrit une méthode de raboutage de deux tiges en matériaux composites selon le préambule de la revendication 1.

Un objectif de l'invention est de remédier aux inconvénients des documents précités et d'apporter une solution originale pour un procédé et un dispositif de raboutage des fibres textiles multifilamentaires pour une installation de fabrication en continu de matériaux composites longilignes.

Cet objectif est atteint par l'invention qui propose un procédé de raboutage des deux faisceaux de fibres textiles multifilamentaires dans lequel :
- on introduit une partie terminale d'un premier faisceau dans une première extrémité d'une gaine thermorétractable et une partie terminale d'un deuxième faisceau dans une deuxième extrémité de la gaine, opposée axialement à la première, jusqu'à ce que les extrémités des parties terminales des deux faisceaux se trouvent l'une en face de l'autre,
- on introduit une matière organique durcissable à l'intérieur de la gaine dans un espace séparant lesdites parties terminales des faisceaux de façon à joindre les parties terminales entre elles par l'intermédiaire d'une partie de j onction, la matière organique durcissable étant introduite dans l'espace existant entre les extrémités des parties terminales des deux faisceaux après la mise en place des faisceaux à l'intérieur de la gaine,
- on chauffe une partie de la gaine thermorétractable entourant la partie de jonction à une température prédéterminée,
- on durcit la matière organique durcissable,
- on retire la gaine.

Autrement dit, le procédé de l'invention permet de joindre bout à bout les extrémités des deux faisceaux de fibres multifilamentaires en une seule pièce à l'aide d'un dosage précis de matière organique durcissable qui forme le liant entre les deux et cela de manière à contrôler la forme et les dimensions de la partie de jonction obtenue après l'assemblage des deux faisceaux de fibres. Le liant est dosé de manière très précise afin d'obtenir un raccord suffisamment résistant, mais sans en accroître l'épaisseur. Selon l'invention également, on réalise la jonction des deux faisceaux à l'intérieur d'une gaine thermorétractable. Par gaine thermorétractable on comprend un tube flexible apte à se resserrer lorsqu'on lui applique de la chaleur. Ainsi, lorsque chauffée, la gaine se resserre autour des faisceaux et du liant en les maintenant fermement en place le temps que la matière qui lie les faisceaux durcisse. Ceci permet ainsi aux filaments des faisceaux de ne pas se mélanger ou de changer de position lors de l'assemblage et d'obtenir ainsi un faisceau continu, en un seul morceau et d'épaisseur uniforme sur sa longueur.

Ainsi, le procédé de l'invention permet de rabouter deux faisceaux de fibres textiles multifilamentaires de manière à obtenir un faisceau commun ayant une partie de jonction d'épaisseur constante, donc sans surépaisseur, ni superposition des fibres, ce qui permet à ce faisceau unique de passer à travers les différentes filières de calibration d'une installation d'imprégnation en continu de fibres de grande longueur par de la résine pour la fabrication d'éléments composites longilignes en grande longueur. Par ailleurs, ce procédé d'assemblage des parties terminales des faisceaux appartenant à deux bobines différentes prend peu de temps, de l'ordre de quelques minutes, ce qui implique un fonctionnement quasi continu de l'installation, sans besoin de vider complétement les différents chambres et compartiments de celle-ci, comme c'était le cas dans l'état de la technique.

La matière organique durcissable est introduite dans l'espace existant entre les extrémités des parties terminales des deux faisceaux de façon à former la partie de jonction après la mise en place des faisceaux à l'intérieur de la gaine. Ainsi, l'introduction de la matière organique durcissable dans la gaine après la mise en place des faisceaux permet un meilleur positionnement de celle-ci par rapport aux extrémités des faisceaux à rabouter. Dans un mode préféré de réalisation de l'invention, la matière organique durcissable est introduite après la mise en place des faisceaux par injection à travers la gaine, dans quel cas la matière organique durcissable se trouve à l'état liquide ou visqueux avant son introduction dans la gaine et elle passe à l'état solide après l'étape du procédé selon laquelle on la fait durcir.

Les faisceaux de fibres textiles multifilamentaires assemblés avec le procédé de l'invention peuvent être identiques, notamment les fibres sont dans une même matière et ont une même densité massique linéaire.

Selon le procédé de l'invention, on peut couper en biseau les extrémités des parties terminales des faisceaux avant leur introduction dans la gaine. Les deux biseaux se faisant face sont parallèles et se superposent au moins en partie faisant que leur assemblage à l'aide de la matière durcissable soit encore plus robuste.

On peut maintenir en position à l'intérieur de la gaine la partie terminale de chaque faisceau jusqu'à ce que ladite matière organique durcissable durcisse. Ceci permet un positionnement précis des éléments de l'assemblage les uns par rapport aux autres et cela pendant toute la durée du procédé de raboutage.

Ladite gaine thermorétractable peut être un tube en polyoléfine.

Ladite gaine peut être transparente aux rayonnements UV et de préférence elle peut également être transparente à la lumière.

On peut chauffer la gaine thermorétractable par application d'un flux d'air chaud à une température supérieure à la température de rétractation de la gaine. La gaine thermorétractable est de préférence un tube en polyoléfine ayant un diamètre préétabli, supérieur à celui des faisceaux à assembler. Le chauffage à l'air chaud permet à la gaine de se rétracter rapidement et également de se refroidir après l'arrêt du soufflage. Pour une gaine en polyoléfine, une telle température peut être comprise entre 210°C et 250°C. Dans une variante, on applique un flux d'air non chauffé après que la gaine soit retractée afin d'accélérer son refroidissement.

On peut retirer la gaine thermorétractable par incision mécanique sur sa longueur ou par chauffage après avoir initié une incision à l'une de ses extrémités. Dans une variante, on retire la gaine par incision sur toute sa longueur. Dans une variante préférée de l'invention, on pratique une incision à l'une des extrémités de la gaine et on applique ensuite un flux d'air chaud, chauffé à la même température que celle pour la rétractation de la gaine, ce qui fait propager l'entaille sur la longueur de la gaine et permet son retrait.

Le procédé de l'invention peut comprendre une étape supplémentaire de contrôle du diamètre de la jonction des deux faisceaux. On peut mesurer le diamètre de la partie de jonction afin de vérifier que celle-ci peut passer à travers l'orifice calibré des filières. On peut ensuite ajuster si besoin le diamètre de la partie de jonction des deux faisceaux, par exemple en ajustant la quantité de matière organique utilisée.

Par fibre textile multifilamentaire on comprend une fibre qui comprend plusieurs filaments textiles élémentaires agencés côté-à-côte pour former un faisceau, faisceau dont les fibres élémentaires sont unidirectionnelles en étant sensiblement parallèles entre elles.

Les fibres textiles multifilamentaires peuvent être choisies dans le groupe constitué par les fibres de verre, de carbone, de silice, de basalte, de céramique et les mélanges de telles fibres, de préférence dans le groupe constitué par les fibres de verre, de carbone et les mélanges de telles fibres et encore plus préférentiellement lesdites fibres textiles multifilamentaires peuvent être des fibres de verre. Ces fibres sont utilisées pour réaliser des composites longilignes réalisées par imprégnation d'une composition durcissable des fibres textiles multifilamentaires.

La matière organique durcissable peut être du type thermodurcissable, de préférence réticulable et encore plus préférentiellement du type vinylester. Par matière organique durcissable on comprend une matière comportant, en poids, plus de 50%, de préférence plus de 75% et encore plus préférentiellement plus de 90% de matière organique durcissable. Ainsi, cette matière peut être une matière polymérique thermodurcissable par exemple à base de polyester insaturé, de polyépoxide, de dérivé phénolique ou d'aminoplaste. De préférence, la matière organique durcissable est réticulable. Il s'agit par exemple d'une résine réticulable par rayonnement ionisant, la polymérisation finale pouvant être déclenchée et contrôlée aisément au moyen d'un traitement ionisant, par exemple de type UV ou UV-visible. A titre de matière organique durcissable réticulable on utilise préférentiellement une résine polyester (à base de polyester insaturé) ou plus préférentiellement encore une résine vinylester.

De manière avantageuse, la matière organique durcissable utilisée pour le raboutage des fibres textiles multifilamentaires selon l'invention est la même que celle utilisée pour l'imprégnation de ces fibres lors de la fabrication d'un composite longilignes réalisées par imprégnation d'une composition durcissable des fibres textiles multifilamentaires.

L'objectif de l'invention est également atteint avec un dispositif de raboutage des deux faisceaux de fibres textiles multifilamentaires comportant une table de support pour des moyens de guidage d'un premier faisceau et des moyens de guidage d'un deuxième faisceau agencés de manière à ce que les parties terminales desdits faisceaux soient déplaçables par rapport à des moyens de support d'une gaine thermorétractable disposés entre les moyens de guidage du premier faisceau et les moyens de guidage du deuxième faisceau de manière à ce que les parties terminales des faisceaux puissent être introduites dans la gaine lorsqu'elle est maintenue par lesdits moyens de support, des moyens permettant d'introduire une quantité prédéterminée de matière organique durcissable à l'intérieur de la gaine, des moyens permettant de durcir ladite matière organique durcissable et des moyens de chauffage de ladite gaine thermorétractable.

Le dispositif selon l'invention comprend des moyens pour injecter la matière organique durcissable à travers ladite gaine. Ceci permet d'agencer la matière organique durcissable à un endroit précis situé de préférence entre les extrémités des deux fibres. La gaine peut être transparente pour encore plus de précision.

Le dispositif de l'invention peut comprendre des moyens de maintien en position des extrémités des faisceaux à l'intérieur de ladite gaine.

Le dispositif peut comprendre des moyens de maintien en position des extrémités de la gaine.

Le dispositif peut comprendre des moyens de maintien en position de la partie rectiligne de la gaine, en particulier pour faciliter la perforation par une aiguille pour l'injection de la matière organique.

Ladite matière organique durcissable peut être une résine photopolymérisable et en ce que le dispositif peut comprendre une lampe UV.

Le dispositif de l'invention peut faire partie d'une installation de fabrication en continu de matériaux composites longilignes réalisées par imprégnation d'une composition durcissable des fibres textiles multifilamentaires comportant une chambre à vide, une chambre d'imprégnation avec une résine durcissable, des moyens de transport d'un faisceau de fibres textiles multifilamentaires à travers la chambre d'imprégnation et des moyens de polymérisation de la résine.

L'invention sera mieux comprise grâce à la suite de la description, qui s'appuie sur les figures suivantes :
- les figures 1a à 1f sont des vues schématiques illustrant les différentes étapes du procédé de raboutage de fibres textiles multifilamentaires selon un mode préféré de réalisation de l'invention ;
- la figure 2 est une vue en coupe d'une partie de support de la gaine faisant partie d'un dispositif de mise en œuvre du procédé de raboutage de l'invention ;
- la figure 3 est une vue en perspective d'un dispositif de mise en œuvre du procédé de raboutage de l'invention illustré en position de fonctionnement ;
- la figure 4 est une vue en perspective d'un dispositif du dispositif de mise en œuvre du procédé de l'invention illustré en fin de procédé de raboutage.

Sur les différentes figures, les éléments identiques ou similaires portent la même référence. Leur description n'est donc pas systématiquement reprise.

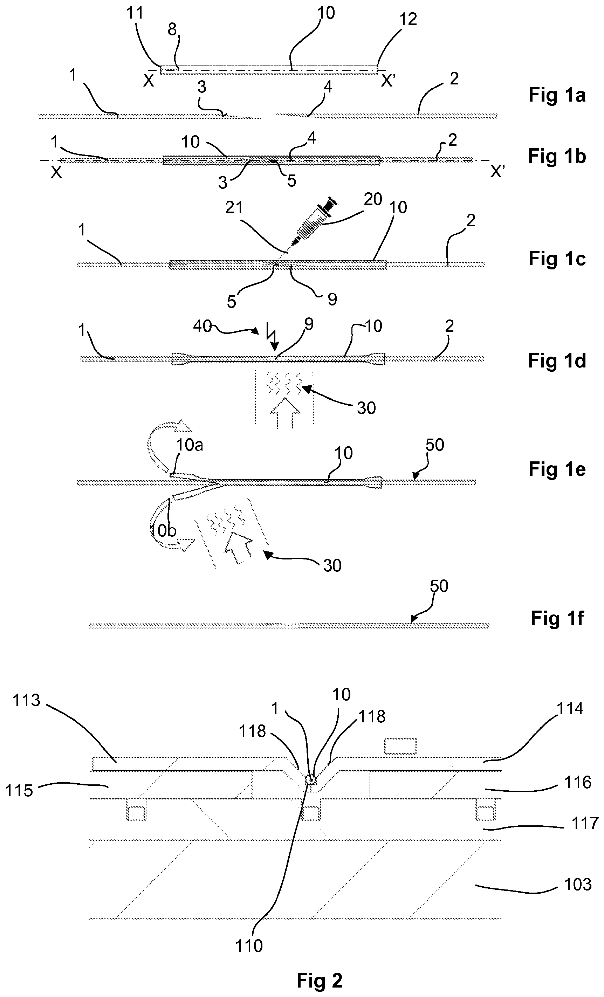

Les figures 1a à 1f illustrent de manière schématique les différentes étapes du procédé de raboutage des deux faisceaux 1 et 2 de fibres textiles multifilamentaires de l'invention. Dans l'exemple illustré aux figures, les fibres des faisceaux 1 et 2 sont des fibres de verre de 600 tex chacun. Le procédé de l'invention peut être utilisé avec des fibres de verre ayant des densités massiques linéaires qui sont par exemple comprises entre 60 et 9800 tex. Sur la figure 1a on remarque les éléments utilisés pour réaliser le raboutage de l'invention, notamment deux faisceaux 1 et 2 de fibres textiles multifilamentaires et une gaine 10 thermorétractable. Les faisceaux 1, 2 présentent chacun une partie terminale 3, respectivement 4 de forme biseautée. La gaine 10 thermorétractable est un tube de forme générale cylindrique autour d'un axe de révolution ou axe longitudinal X-X', tube qui a deux extrémités 11, 12 et une forme générale rectiligne. Dans cet exemple, la gaine présente une incision 8 de quelques mm réalisée à l'une de ses extrémités 11.

La figure 1b illustre la première étape du procédé qui consiste à faire rentrer les extrémités 3 et 4 des parties terminales de chaque faisceau 1, 2 dans la gaine 10 thermorétractable. Plus précisément, on introduit la partie terminale 3 du premier faisceau 1 dans une première extrémité 11 de la gaine 10 thermorétractable en la faisant glisser parallèlement à l'axe longitudinal X-X' de la gaine 10 et la partie terminale 4 du deuxième faisceau 2 dans une deuxième extrémité 12, opposée axialement à la première, en la faisant glisser parallèlement à l'axe longitudinal de ladite gaine jusqu'à ce que les extrémités 3, 4 des parties terminales des deux faisceaux 1, 2 se trouvent l'une en face de l'autre à une distance prédéterminée formant un espace 5 à l'intérieur de a gaine 10.

La gaine 10 thermorétractable est de préférence un tube sensiblement cylindrique de diamètre supérieur au diamètre de la fibre. La gaine 10 est de préférence un tube réalisé en polyoléfine et encore plus préférentiellement il est transparent à la lumière et aux rayons UV. Le diamètre de la gaine 10 est choisi de manière à ce que, d'une part, les faisceaux de fibres textiles multifilamentaires 1 et 2 puissent glisser à l'intérieur de la gaine et, d'autre part, à ce que, après avoir été soumise à un chauffage, son diamètre soit plus petit que celui des faisceaux 1, 2 qu'elle enserre. La longueur de la gaine 10 est également choisie de manière à ce qu'elle puisse couvrir les parties terminales des deux faisceaux même après son rétrécissement en longueur après chauffage. A titre d'exemple, avec des faisceaux de fibres de verre de 600 tex on utilise une gaine 10 thermorétractable ayant un diamètre intérieur compris entre 1.5 et 2.5 mm, de préférence égal à 2 mm, avec une épaisseur de paroi avant retrait comprise entre 0.1 et 0.6 mm, de préférence égale à 0.25 mm et une longueur comprise entre 40 et 100 mm, et de préférence égale à 60 mm.

Les extrémités 3, 4 des faisceaux 1, 2 sont coupées en biseau de manière à ce qu'elles puissent se superposer tout en étant espacées et parallèles entre elles dans l'espace 5 (fig1b). De préférence, les extrémités 3, 4 sont maintenues en position lors du procédé de raboutage.

Dans la deuxième étape du procédé, tel que visible à la figure 1c, on introduit une matière organique durcissable à l'intérieur de la gaine 10 thermorétractable, de préférence sensiblement au centre de l'espace 5 existant entre les extrémités 3, 4 se faisant face des parties terminales des deux faisceaux 1, 2, espace destiné à former une partie de jonction 9. La matière organique durcissable est dans l'exemple ici décrit une résine vinylester comportant un photoinitiateur. La quantité nécessaire de résine est introduite dans l'espace 5 à l'intérieur de la gaine 10 à l'aide d'une seringue 20 dont l'aiguille 21 passe à travers l'épaisseur de la gaine 10 exactement à l'emplacement destiné à recevoir la résine, la gaine 10 étant transparente. Dans le cas d'un dispositif de raboutage automatisé, la seringue peut être avantageusement remplacée par une petite pompe volumétrique permettant d'injecter un volume précis dans la gaine 10. Dans une variante, la gaine n'est pas transparente à la lumière, mais elle présente un marquage sur sa paroi externe à l'endroit de l'emplacement de l'espace 5. Dans une autre variante, la résine se trouve déjà à l'intérieur de la gaine 10 avant l'introduction des parties terminales des faisceaux dans la gaine. Le dispositif peut comprendre de manière avantageuse un support amovible ou non de la partie rectiligne de la gaine afin de faciliter la perforation de la gaine par l'extrémité de l'aiguille, et d'éviter que la gaine se déplace sous l'aiguille au lieu d'être perforée par elle.

La figure 1d illustre la troisième et la quatrième étape du procédé de l'invention. La troisième étape consiste à retreindre la gaine 10 thermorétractable. Dans l'exemple décrit, on utilise un dispositif soufflant 30 qui envoie un flux d'air chauffé à une température d'environ 210 à 250 °C et que l'on applique principalement sur la partie de la gaine 10 entourant la partie de jonction 9, puis en s'éloignant de la partie de jonction 9 pour répartir la résine de part et d'autre de la partie de jonction. La gaine 10 se retreint et comprime ainsi la résine et les extrémités 3, 4 des fibres, ce qui assure une bonne imprégnation des fibres sur une partie de jonction de petit diamètre. On observe que la gaine 10 s'est retreint sur la majeure partie de sa longueur, celle correspondant à la zone ayant été chauffée, exception faite à ses extrémités qui n'ont pas subi d'application d'air chaud. Dans une variante, on applique le flux d'air chaud sur toute la longueur de la gaine 10 en commençant par l'une de ses extrémités, 11 (ou 12) et en chauffant progressivement jusqu'à atteindre l'autre extrémité 12 (ou 11). Un dispositif de maintien de la partie rectiligne de la gaine 10 est utile dans cette étape pour garantir que la gaine une fois thermoformée soit sensiblement rectiligne, et non pas courbée de façon aléatoire. La gaine 10 est laissée se refroidir ensuite à l'air ambiant ou on la refroidit de manière accélérée avec un flux d'air froid. Il est à noter également que la petite incision réalisée par la perforation de l'aiguille 21 se referme sur elle-même dès le retrait de l'aiguille car le matériau de la gaine 10 thermorétractable est souple, et cette incision refermée sur elle-même ne conduit pas à une fuite notable de résine avant, pendant et après l'opération de thermoformage de la gaine 10.

La quatrième étape consiste à réticuler la résine à l'aide d'un dispositif à rayonnement UV 40 qui est orienté de manière que le rayonnement UV émis soit envoyé dans la partie de jonction 9 pour une durée prédéterminée, par exemple de l'ordre de quelques secondes. Ceci a pour effet de solidifier la résine et de rendre ainsi solidaires les extrémités 3 et 4 des faisceaux 1 et 2 de fibres pour former un faisceau commun ou faisceau unique 50.

Une fois la liaison des deux faisceaux 1 et 2 réalisée, on retire la gaine 10. Dans une variante on retire la gaine 10 en effectuant une incision avec un outil coupant sur toute sa longueur. Dans une autre variante, tel qu'illustré à la figure 1e, on initie soit au préalable soit lors de l'opération de retrait une entaille à l'aide d'un outil coupant à l'une de ses extrémités et on applique ensuite un flux d'air chaud chauffé à environ 250°C à l'aide du dispositif soufflant 30 à partir de la zone entaillée, ce qui permet à l'entaille de se propager sur la longueur de la gaine 10 et à se détacher en deux parties 10a et 10b. Au besoin, une petite pince peut être utilisée pour faciliter le retrait de la gaine. Toujours dans le but de faciliter le retrait de la gaine, le dispositif de maintien de la gaine dans sa partie rectiligne peut être dégagé lors de cette opération, tel qu'il sera expliqué par la suite en référence au dispositif de l'invention.

Le faisceau unique 50 ainsi obtenu par le procédé de raboutage de l'invention (fig. 1f) est prêt à être utilisé dans une installation de fabrication de matériaux composites longilignes réalisées par imprégnation d'une composition durcissable, notamment une résine vinylester photopolymérisable notamment du type décrit dans le document EP 1 174 250. Une opération de contrôle du diamètre de la partie de jonction 9 peut être réalisée par exemple avec une buse calibrée en deux parties avant d'utiliser le faisceau unique 50 dans l'installation, ou à l'aide d'un dispositif de mesure optique du diamètre. Ceci permet de détecter une éventuelle surépaisseur (due par exemple à un mauvais dosage de la quantité de résine introduite dans l'espace 5) et d'éviter de casser le faisceau ainsi obtenu lors de son passage dans l'une des filières calibrées de l'installation.

Les figures 2, 3 et 4 illustrent différentes vues d'un exemple de dispositif 100 de raboutage de l'invention. Le dispositif 100 comporte une table 103 de support pour les faisceaux 1 et 2 à rabouter et pour une gaine 10 thermorétractable. Plus particulièrement la table 103 a une forme générale de plaque rectangulaire et comporte, à l'une de ses extrémités, des moyens de guidage d'un premier faisceau 1 réalisé sous forme d'un sillon 101 s'étendant en direction longitudinale qui est destiné à recevoir la partie terminale du premier faisceau 1, ainsi qu'un dispositif de maintien 111 en position du faisceau 1. La table 103 comporte également des moyens de guidage d'un deuxième faisceau 2 réalisés sous forme d'un deuxième sillon 102 qui est pratiqué dans l'épaisseur de la table 103 à l'extrémité opposée du sillon 101 pour recevoir la partie terminale du deuxième faisceau 2 maintenu en position, lorsque présent, à l'aide d'un deuxième dispositif de maintien 112. Les dispositifs de maintien 111 et 112 dans l'exemple illustré sont des dispositifs du type à genouillère. Dans la partie centrale de la table 103 située entre les deux sillons 101 et 102 se trouve un canal 110 qui est aligné longitudinalement sur les sillons 101 et 102 et sur l'axe longitudinal de la table 103. Le canal 110 est destiné à recevoir une gaine 10 thermorétractable et forme un moyen de support de celle-ci. La table 103 comprend également à chacune de ses extrémités longitudinales, un support 104 pour un jeu de rouleaux de guidage 106 du faisceau 1 et, respectivement un support 105 pour un jeu de rouleaux de guidage 107 du faisceau 2.

De part et d'autre du canal 110, à chaque entrée dans celui-ci, on dispose une pièce 119 rigide évasée ouverte sur le dessus permet de mieux guider l'extrémité 3, respectivement 4, de la partie terminale de chaque faisceau lors de son introduction dans la gaine 10. Plus particulièrement, tel que vu de dessus, la pièce 119 présente en sa partie centrale une ouverture en forme d'entonnoir en étant plus large à son extrémité d'entrée du faisceau 1, 2 et en se rétrécissant à l'entrée de la gaine 10. Ceci permet de faciliter l'introduction des parties terminales des faisceaux 1 et 2 dans la gaine 10 thermorétractable qui est dans ce cas un tube cylindrique de section constante sur toute sa longueur. Dans une variante, on utilise une gaine 10 thermorétractable cylindrique dont les extrémités opposées sont évasées afin de permettre l'introduction des faisceaux 1, 2.

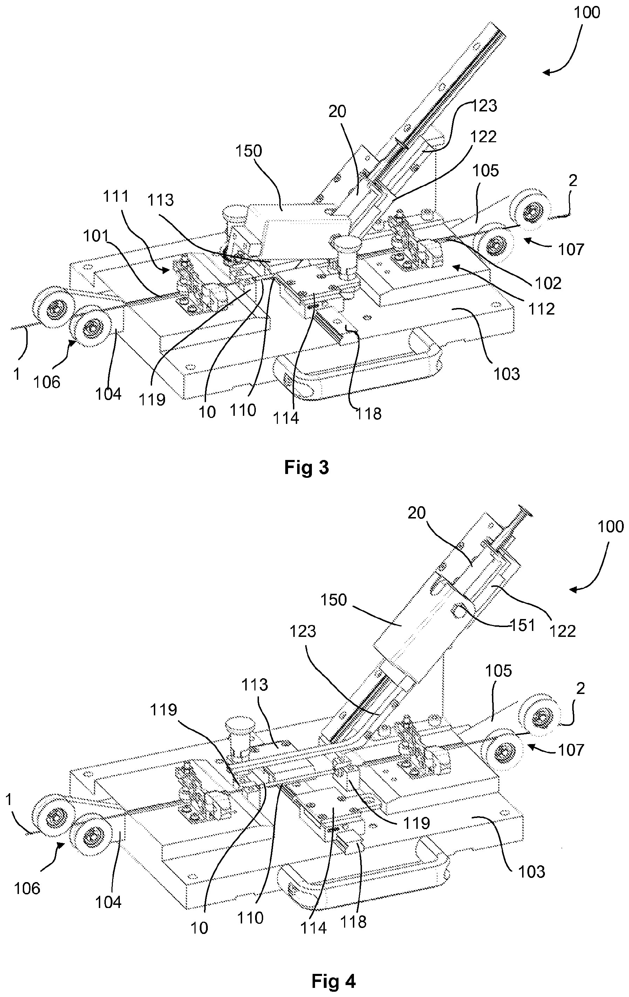

La figure 2 est une vue en coupe transversale réalisée à travers la gaine 10, du côté gauche, de celle-ci, qui permet d'illustrer la façon dont la gaine 10 thermorétractable est maintenue en place au sein du dispositif de raboutage. La gaine 10 est insérée dans le canal 110 ayant une section transversale de forme carrée et des dimensions proches du diamètre de la gaine de manière à ce que la gaine soit maintenue serrée dans le canal 110. Afin de pouvoir maintenir serrée la gaine 10 dans le canal 110, on utilise un support de gaine en deux parties 113, 114 dont au moins l'une (114) est mobile en coulissement transversal permettant de réaliser l'ouverture et la fermeture du canal 110. Plus précisément, chaque partie 113, 114 est montée fixe sur une pièce de support 115, 116, au moins l'une (116) des pièces de support étant montée coulissante sur un rail 118, monté lui fixe sur la table 103, et pouvant s'écarter et s'approcher de l'autre (115) lorsqu'elle est entraînée en translation. Les parties 113, 114 sont des plaques rigides comportant chacune sur le côté faisant face à l'autre, une face inclinée 118 débouchant dans le canal 110. Les faces inclinées 118 se faisant face des parties 113, 114 forment ainsi une gouttière au fond de laquelle se trouve le canal 110. Ceci permet d'assurer un bon maintien de la gaine 10 lors de l'opération de raboutage (fig. 3), ainsi que de pouvoir libérer facilement le faisceau obtenu avec le procédé de l'invention en fin d'opération de raboutage (voir fig. 4, où la partie 114 est en position écartée).

Le dispositif 100 comprend également des moyens permettant d'introduire une quantité prédéterminée de matière organique durcissable à l'intérieur de la gaine 10, notamment une seringue 20. La seringue 20 est tenue par un support 122 qui est monté à coulissement le long d'un rail incliné 123 afin de permettre de retirer la seringue en fin d'opération et de la rapprocher de la gaine en début d'opération. Un couvercle de protection 150 de la seringue 20 est tenu par le support 122 en étant monté à possibilité de rotation autour d'un axe 151 du support 122. Ainsi, en fonctionnement le couvercle 150 se déplace avec la seringue 20 le long du rail incliné 123 et il est rabattu sur la seringue pendant l'injection de la résine et lors du retrait de la seringue 20. Dans le cas d'un dispositif de raboutage automatisé, la seringue peut être avantageusement remplacée par une petite pompe volumétrique permettant d'injecter un volume précis dans la gaine 10.

Le dispositif 100 comprend par ailleurs des moyens de chauffage de la gaine 10 thermorétractable, par exemple un dispositif de soufflage d'air chaud (non représenté) apte à envoyer un flux d'air chauffé à une température comprise entre 210°C et 250°C en direction de la gaine 10. Le dispositif comprend également des moyens permettant de durcir la résine telle une lampe UV (non représentée) qui peut être du type Hönle Bluepoint^{®} et que l'on applique sur la partie de la gaine correspondant à la partie de jonction 9 pour une durée d'environ 10 à 15s.

En fonctionnement, on commence par disposer une gaine 10 thermorétractable dans le canal 110. On introduit la partie terminale d'un premier faisceau 1 de fibres de verre, via le sillon 101 et la pièce 119, dans l'une des extrémités de la gaine 10, jusqu'à une position préétablie, de préférence proche du centre de celle-ci, et on fixe en place la partie terminale du premier faisceau 1 à l'aide du dispositif de maintien 111. On fait la même chose à l'autre extrémité de la gaine en y introduisant la partie terminale d'un deuxième faisceau 2 de fibres de verre qu'on maintient en place, après introduction dans la gaine 10, à l'aide du dispositif de maintien 112. On met en position les parties 113, 114 du support de la partie rectiligne de la gaine 10 en déplaçant la partie 114 en direction de la partie 113 de manière à enserrer la gaine 10 dans le canal 110. On rapproche ensuite la seringue 20 de la gaine 10 et, après insertion de l'aiguille 21 dans la gaine, on actionne le piston de la seringue pour y introduire une quantité prédéterminée de résine. Pendant cette opération, l'aiguille 21 de la seringue est protégée par le couvercle 150.

On retire ensuite la seringue en la partie haute du rail 123, et le couvercle de protection 150 de l'aiguille se referme par-dessus l'aiguille pour éviter tout risque de blessure et pour protéger l'extrémité de l'aiguille de la lumière et du rayonnement UV, et on approche ensuite un dispositif soufflant de la gaine 10 pour chauffer de préférence la partie de la gaine correspondant à la partie de jonction où a été introduite la résine. La gaine 10 se rétracte sous l'effet de la chaleur et resserre ensemble les extrémités des faisceaux de fibres de verre et la résine. Après refroidissement de la gaine, on applique un rayonnement UV sur la partie retreinte de la gaine pour réticuler la résine, ce qui a pour effet d'obtenir l'assemblage des deux faisceaux.

On retire ensuite la gaine 10. Le faisceau unique 50 obtenu par raboutage peut être retiré en le soulevant, après avoir libéré les parties terminales des faisceaux initiaux de leur maintien par les dispositifs 111 et 112. Le faisceau ainsi obtenu peut être passé dans l'installation, éventuellement après avoir vérifié la valeur du diamètre de la partie de jonction.

On obtient ainsi un produit composite rabouté qui offre des caractéristiques mécaniques aussi élevées que les zones du faisceau se trouvant en dehors des zones raboutées. Ainsi, le procédé de l'invention permet de réaliser un tel type de matériaux composites sans limite de longueur, ce qui peut être particulièrement avantageux pour différentes applications, par exemples celles nécessitant le raboutage des câbles sous-marins de télécommunication placés au fond des océans.

D'autres variantes et modes de réalisation de l'invention peuvent être envisagés dans le cadre de l'invention telle que revendiquée. Ainsi, le dispositif de raboutage peut être indépendant de l'installation, par exemple portatif. On peut utiliser le procédé de l'invention avec différents types de fibres textiles multifilamentaires et on peut par ailleurs rabouter une première fibre avec une deuxième ayant des caractéristiques (par exemple nature, densité massique linéaire) différentes de la première.

Par ailleurs, on peut envisager l'utilisation du procédé et dispositif de raboutage de l'invention avec une matière organique thermiquement durcissable, dont la température de durcissement est égale ou supérieure à celle appliquée pour retreindre la gaine thermorétractable. Cette variante peut être particulièrement avantageuse lors de l'utilisation de fibres non transparentes, telles que les fibres de carbone ou les fibres de basalte ne permettant pas la pénétration à cœur du rayonnement UV.

## Revendications

1. Procédé de raboutage des deux faisceaux (1, 2) de fibres textiles multifilamentaires dans lequel
- on introduit une partie terminale (3) d'un premier faisceau (1) dans une première extrémité (11) d'une gaine (10) thermorétractable et une partie terminale (4) d'un deuxième faisceau (2) dans une deuxième extrémité (12) de ladite gaine, opposée axialement à la première, jusqu'à ce que les extrémités des parties terminales des deux faisceaux se trouvent l'une en face de l'autre,
- on introduit une matière organique durcissable à l'intérieur de la gaine (10) dans un espace (5) séparant lesdites parties terminales (3,4) des faisceaux (1,2) de façon à joindre les parties terminales entre elles par l'intermédiaire d'une partie de jonction (9), ,
- on chauffe une partie de la gaine (10) thermorétractable entourant la partie de jonction (9) à une température prédéterminée,
- on durcit la matière organique durcissable,
- on retire la gaine (10),
**caractérisé en ce que** la matière organique durcissable est introduite dans l'espace (5) existant entre les extrémités des parties terminales (3,4) des deux faisceaux (1,2) après la mise en place des faisceaux à l'intérieur de la gaine (10).

2. Procédé selon revendication 1, **caractérisé en ce qu'**on coupe en biseau les extrémités des parties terminales (3,4) des faisceaux (1,2) avant leur introduction dans la gaine (10).

3. Procédé selon l'une des revendications précédentes, **caractérisé en ce qu'**on maintient en position la partie terminale (3,4) de chaque faisceau (1,2) jusqu'à ce que ladite matière organique durcissable durcit.

4. Procédé selon l'une des revendications 1 à 3, **caractérisé en ce que** ladite gaine (10) thermorétractable est un tube en polyoléfine.

5. Procédé selon l'une des revendications précédentes, **caractérisé en ce qu'**on chauffe ladite gaine (10) thermorétractable par application d'un flux d'air chaud à une température supérieure à la température de rétractation de la gaine.

6. Procédé selon l'une des revendications précédentes, **caractérisé en ce qu'**on retire la gaine (10) thermorétractable par incision mécanique sur sa longueur ou par chauffage après avoir initié une incision (8) à l'une de ses extrémités (11).

7. Procédé selon l'une des revendications précédentes, **caractérisé en ce qu'**il comprend une étape supplémentaire de contrôle du diamètre de la partie de jonction (9) des deux faisceaux (1,2).

8. Procédé selon l'une des revendications précédentes, **caractérisé en ce que** lesdites fibres textiles multifilamentaires sont choisies dans le groupe constitué par les fibres de verre, de carbone, de silice, de basalte, de céramique et les mélanges de telles fibres, de préférence dans le groupe constitué par les fibres de verre, de carbone et les mélanges de telles fibres et encore plus préférentiellement lesdites fibres textiles multifilamentaires sont des fibres de verre.

9. Procédé selon l'une des revendications précédentes, **caractérisé en ce que** ladite matière organique durcissable est du type thermodurcissable, de préférence réticulable et encore plus préférentiellement du type vinylester.

10. Dispositif (100) de raboutage des deux faisceaux (1,2) de fibres textiles multifilamentaires comportant une table (103) de support pour des moyens de guidage d'un premier faisceau (1) et des moyens de guidage d'un deuxième faisceau (2) agencés de manière à ce que les parties terminales (3,4) desdits faisceaux soient déplaçables par rapport à des moyens de support d'une gaine (10) thermorétractable disposés entre les moyens de guidage du premier faisceau et les moyens de guidage du deuxième faisceau de manière à ce que les parties terminales des faisceaux puissent être introduites dans la gaine lorsqu'elle est maintenue par lesdits moyens de support, des moyens permettant d'introduire une quantité prédéterminée de matière organique durcissable à l'intérieur de la gaine, des moyens permettant de durcir ladite matière organique durcissable et des moyens de chauffage de ladite gaine thermorétractable, **caractérisé en ce qu'**il comprend des moyens pour injecter ladite matière organique durcissable à travers ladite gaine (10).

11. Dispositif selon la revendication 10, **caractérisé en ce qu'**il comprend des dispositifs de maintien (111, 112) en position des parties terminales des faisceaux (1,2) à l'intérieur de ladite gaine (10).

12. Dispositif selon l'une des revendications 10 à 11, **caractérisé en ce que** ladite matière organique durcissable est une résine photopolymérisable et **en ce que** le dispositif comprend une lampe UV.

13. Installation de fabrication en continu de matériaux composites longilignes réalisées par imprégnation d'une composition durcissable des fibres textiles multifilamentaires comportant une chambre à vide, une chambre d'imprégnation avec une résine durcissable, des moyens de transport d'un faisceau de fibres textiles multifilamentaires à travers la chambre d'imprégnation et des moyens de polymérisation de la résine, **caractérisée en ce qu'**elle comprend un dispositif (100) de raboutage selon l'une des revendications 10 à 12.

## Patentansprüche

1. Verfahren zum Aneinanderfügen der beiden Stränge (1, 2) aus textilen Multifilamentfasern, bei dem
- man einen Endabschnitt (3) eines ersten Strangs (1) in ein erstes Ende (11) eines Wärmeschrumpfschlauchs (10) und einen Endabschnitt (4) eines zweiten Strangs (2) in ein zweites Ende (12) des Schlauchs, das zu dem ersten axial entgegengesetzt ist, einführt, bis die Enden der Endabschnitte der beiden Stränge einander gegenüber liegen,
- man ein härtbares organisches Material in das Innere des Schlauchs (10) in einen Raum (5), der die Endabschnitte (3,4) der Stränge (1,2) trennt, einführt, so dass die Endabschnitte über einen Verbindungsabschnitt (9) untereinander verbunden werden,
- man einen Abschnitt des Wärmeschrumpfschlauchs (10), der den Verbindungsabschnitt (9) umgibt, auf eine vorbestimmte Temperatur erhitzt,
- man das härtbare organische Material härtet,
- man den Schlauch (10) abzieht,
**dadurch gekennzeichnet, dass** das härtbare organische Material in den Raum (5), der zwischen den Enden der Endabschnitte (3,4) der beiden Stränge (1,2) besteht, nach dem Einsetzen der Stränge in das Innere des Schlauchs (10) eingeführt wird.

2. Verfahren nach Anspruch 1, **dadurch gekennzeichnet, dass** man die Enden der Endabschnitte (3,4) der Stränge (1,2) vor ihrem Einführen in den Schlauch (10) schräg abschneidet.

3. Verfahren nach einem der vorhergehenden Ansprüche, **dadurch gekennzeichnet, dass** man den Endabschnitt (3,4) jedes Strangs (1,2) in Position hält, bis das härtbare organische Material härtet.

4. Verfahren nach einem der Ansprüche 1 bis 3, **dadurch gekennzeichnet, dass** der Wärmeschrumpfschlauch (10) ein Röhrchen aus Polyolefin ist.

5. Verfahren nach einem der vorhergehenden Ansprüche, **dadurch gekennzeichnet, dass** man den Wärmeschrumpfschlauch (10) durch Anwenden eines Heißluftstroms mit einer Temperatur über der Schrumpftemperatur des Schlauchs erhitzt.

6. Verfahren nach einem der vorhergehenden Ansprüche, **dadurch gekennzeichnet, dass** man den Wärmeschrumpfschlauch (10) durch mechanisches Einschneiden über seine Länge oder durch Erwärmung nach dem Einleiten eines Einschnitts (8) an einem seiner Enden (11) abzieht.

7. Verfahren nach einem der vorhergehenden Ansprüche, **dadurch gekennzeichnet, dass** es einen zusätzlichen Schritt des Prüfens des Durchmessers des Verbindungsabschnitts (9) der beiden Stränge (1,2) umfasst.

8. Verfahren nach einem der vorhergehenden Ansprüche, **dadurch gekennzeichnet, dass** die textilen Multifilamentfasern ausgewählt sind aus der Gruppe bestehend aus Glas-, Carbon-, Siliciumoxid-, Basalt-, Keramikfasern und Mischungen solcher Fasern besteht, bevorzugt aus der Gruppe bestehend aus Glas-, Carbonfasern und Mischungen solcher Fasern, und die textilen Multifilamentfasern noch stärker bevorzugt Glasfasern sind.

9. Verfahren nach einem der vorhergehenden Ansprüche, **dadurch gekennzeichnet, dass** das härtbare organische Material vom wärmehärtbaren Typ ist, bevorzugt vernetzbar ist und noch stärker bevorzugt vom Vinylestertyp ist.

10. Vorrichtung (100) zum Aneinanderfügen der beiden Stränge (1,2) aus textilen Multifilamentfasern, aufweisend einen Trägertisch (103) für Führungsmittel eines ersten Strangs (1) und Führungsmittel eines zweiten Strangs (2), die so gestaltet sind, dass die Endabschnitte (3,4) der Stränge in Bezug auf Trägermittel eines Wärmeschrumpfschlauchs (10), die zwischen den Führungsmitteln des ersten Strangs und den Führungsmitteln des zweiten Strangs angeordnet sind, verlagerbar sind, so dass die Endabschnitte der Stränge in den Schlauch eingeführt werden können, wenn er von den Trägermitteln gehalten wird, Mittel, die das Einführen einer vorbestimmten Menge eines härtbaren organischen Materials in das Innere des Schlauchs ermöglichen, Mittel, die das Härten des härtbaren organischen Materials ermöglichen, und Mittel zum Erhitzen des Wärmeschrumpfschlauchs, **dadurch gekennzeichnet, dass** sie Mittel zum Einspritzen des härtbaren organischen Materials durch den Schlauch (10) hindurch umfasst.

11. Vorrichtung nach Anspruch 10, **dadurch gekennzeichnet, dass** sie Vorrichtungen zum In-Position-Halten (111, 112) der Endabschnitte der Stränge (1,2) in dem Schlauch (10) umfasst.

12. Vorrichtung nach einem der Ansprüche 10 bis 11, **dadurch gekennzeichnet, dass** das härtbare organische Material ein lichtpolymerisierbares Harz ist und dass die Vorrichtung eine UV-Lampe umfasst.

13. Anlage zur kontinuierlichen Herstellung von langgestreckten Verbundmaterialien, die durch Imprägnieren der textilen Multifilamentfasern mit einer härtbaren Zusammensetzung ausgeführt werden, aufweisend eine Vakuumkammer, eine Imprägnierkammer zum Imprägnieren mit einem härtbaren Harz, Mittel zum Transportieren eines Strangs aus textilen Multifilamentfasern durch die Imprägnierkammer und Mittel zur Polymerisation des Harzes, **dadurch gekennzeichnet, dass** sie eine Vorrichtung (100) zum Aneinanderfügen nach einem der Ansprüche 10 bis 12 umfasst.

## Claims

1. Method for splicing two bundles (1, 2) of multifilament textile fibres wherein:
- an end portion (3) of a first bundle (1) is inserted into a first end (11) of a heat-shrinkable sheath (10) and an end portion (4) of a second bundle (2) is inserted into a second end (12) of said sheath, axially opposite the first end, until the ends of the end portions of the two bundles are facing each other,
- a curable organic material is inserted inside the sheath (10) in a space (5) separating said end portions (3, 4) of the bundles (1, 2) so as to join the end portions together by means of a joining portion (9), the curable organic material being inserted into the space (5) existing between the ends of the end portions (3, 4) of the two bundles (1, 2) after the bundles have been placed inside the sheath (10),
- a portion of the heat-shrinkable sheath (10) surrounding the joining portion (9) is heated to a predetermined temperature,
- the curable organic material is cured,
- the sheath (10) is removed.

2. Method according to Claim 1, **characterized in that** the ends of the end portions (3, 4) of the bundles (1, 2) are bevel-cut before they are inserted into the sheath (10).

3. Method according to one of the preceding claims, **characterized in that** the end portion (3, 4) of each bundle (1, 2) is held in position until said curable organic material cures.

4. Method according to one of Claims 1 to 3, **characterized in that** said heat-shrinkable sheath (10) is a polyolefin tube.

5. Method according to one of the preceding claims, **characterized in that** said heat-shrinkable sheath (10) is heated by applying a stream of hot air at a temperature higher than the shrinking temperature of the sheath.

6. Method according to one of the preceding claims, **characterized in that** the heat-shrinkable sheath (10) is removed by mechanical incision over the length thereof or by heating after the initiation of an incision (8) at one end (11) thereof.

7. Method according to one of the preceding claims, **characterized in that** it comprises an additional step of checking the diameter of the joining portion (9) of the two bundles (1, 2).

8. Method according to one of the preceding claims, **characterized in that** said multifilament textile fibres are selected from the group consisting of glass fibres, carbon fibres, silica fibres, basalt fibres, ceramic fibres, and mixtures of such fibres, preferably from the group consisting of glass fibres, carbon fibres and mixtures of such fibres, and more preferably said multifilament textile fibres are glass fibres.

9. Method according to one of the preceding claims, **characterized in that** said curable organic material is heat-curable, preferably crosslinkable and more preferably a vinyl ester.

10. Device (100) for splicing two bundles (1, 2) of multifilament textile fibres comprising a table (103) for supporting means for guiding a first bundle (1) and means for guiding a second bundle (2), arranged so that the end portions (3, 4) of said bundles can be moved relative to means for supporting a heat-shrinkable sheath (10) positioned between the means for guiding the first bundle and the means for guiding the second bundle, so that the end portions of the bundles can be inserted into the sheath when it is held by said supporting means, means allowing the insertion of a predetermined quantity of curable organic material inside the sheath, means for curing said curable organic material and means for heating said heat-shrinkable sheath.

11. Device according to Claim 10, **characterized in that** it comprises means for injecting said curable organic material through said sheath (10).

12. Device according to one of Claims 10 and 11, **characterized in that** it comprises devices (111, 112) for holding the end portions of the bundles (1, 2) in position inside said sheath (10).

13. Device according to one of Claims 10 to 12, **characterized in that** said curable organic material is a photopolymerizable resin and **in that** the device comprises a UV lamp. Facility for continuous manufacturing of elongate composite materials produced by impregnating multifilament textile fibres with a curable composition, comprising a vacuum chamber, a chamber for impregnation with a curable resin, means for conveying a bundle of multifilament textile fibres through the impregnation chamber and means for polymerizing the resin, **characterized in that** it comprises a splicing device (100) according to one of Claims 11 to 13.
